# EUROPÄISCHE PATENTSCHRIFT

(11) **EP 0 493 512 B1**
(45) Veröffentlichungstag und Bekanntmachung des Hinweises auf die Patenterteilung: **25.01.1995**
(21) Anmeldenummer: 90915082.3
(22) Anmeldetag: 28.09.1990
(51) Int. Cl.: G01L 9/02, G01L 19/04

(54) **VORRICHTUNG ZUR MESSUNG MECHANISCHER KRÄFTE UND KRAFTWIRKUNGEN**
DEVICE FOR MEASURING MECHANICAL FORCES AND THEIR DYNAMIC EFFECTS
DISPOSITIF DE MESURE DE FORCES MECANIQUES ET D'EFFETS DYNAMIQUES

(30) Priorität: 29.09.1989 DE 3932618
(43) Veröffentlichungstag der Anmeldung: 08.07.1992
(73) Patentinhaber: FRAUNHOFER-GESELLSCHAFT ZUR FÖRDERUNG DER ANGEWANDTEN FORSCHUNG E.V., 80636 München (DE)
(72) Erfinder: SANDMAIER, Hermann, D-8384 Simbach (DE); OFFEREINS, Henderikus, D-8000 München 40 (DE); MAYER, Godehard, D-8000 München 40 (DE)
(74) Vertreter: Münich, Wilhelm, Dr.
(86) Internationale Anmeldenummer: DE9000738
(87) Internationale Veröffentlichungsnummer: WO9105231

(56) Entgegenhaltungen:
- DE-A- 3 426 165
- DE-A- 3 436 440
- US-A- 4 594 639
- US-A- 4 800 758
- Patent Abstracts of Japan, vol. 8, no. 215 (P-305), abstract from JP-A-59100833 publ. 11 June 1984

## Beschreibung

### Technisches Gebiet

Die Erfindung betrifft eine Vorrichtung zur Messung mechanischer Kräfte und Kraftwirkungen, gemäß dem Oberbegriff des Anspruchs 1.

Mit Hilfe der mechanisch-elektrischen Signalwandler wird die Änderung des Verformungszustandes des Sensorelementes in ein elektrisches Signal umgewandelt, das nach Auswertung durch eine elektrische Schaltung eine Aussage über die mechanische Kraft zuläßt.

### Stand der Technik

Mikromechanischen Vorrichtungen, die sich je nach Ausgestaltung zur Messung von Kräften, Drücken, Beschleunigungen oder Strömungen in Flüssigkeiten eignen, werden beispielsweise in dem Buch Mikromechanik von A. Heuberger beschrieben (Springer Verlag, Berlin u.a., 1989).

Die Meßgenauigkeit bekannter Vorrichtungen wird maßgeblich durch das Montageverfahren der einzelnen Elemente bestimmt. Durch die Verbindung von Materialien, die unterschiedliche thermische Ausdehnungskoeffizienten aufweisen, entstehen bei Temperaturbelastung und durch den Verbindungsprozess im Sensorenelement mechanische Spannungen, die zu einer Langzeitdrift sowie zu einer Temperaturabhängigkeit des Offsets und der Empfindlichkeit führen.

Durch einen möglichst symmetrischen Aufbau der Vorrichtung und die Verwendung thermisch angepaßter Materialien wird bei bekannten Vorrichtungen versucht, den Einfluß der unterschiedlichen Materialparameter auf das Ausgangssignal zu verringern. Bei den in der Mikromechanik bzw. Mikroelektronik üblichen Verbindungsverfahren, dem Anodic-Bonding oder dem Silicon-Direct-Bonding, dem Legieren, dem Löten oder dem Schweißen, die Temperaturen von etwa 400°C bzw. 1100°C benötigen, treten im Sensorelement Verwölbungen und Verbindungen auf, die ebenfalls zu mechanischen Spannungen führen. Analoge Spannungszustände ergeben sich bei Klebeverbindungen aufgrund der Aushärtecharakteristik der Kleber.

Bei einer gattungsgemäßen Vorrichtung nach der deutschen Offenlegungsschrift DE 34 26 165 werden die durch die Verbindungsverfahren hervorgerufenen Spannungen in begrenztem Umfang dadurch von dem Sensorelement abgehalten, daß das Zwischenstück in einem Bereich der Verbindung mit dem Tragekörper parallel zur Verbindungsfläche gedünnt ist. Da der Tragekörper dieser Vorrichtung auf nicht gedünnten Bereichen der Zwischenschicht abgestützt ist, kann die Übertragung der Spannungszustände nur unzureichend verringert werden. Da der Tragekörper mit einem weiteren, als Verteiler wirkenden Körper verbunden ist, der keinen gedünnten Bereich aufweist, wirken die durch diese Verbindung hervorgerufenen oder übertragenen mechanischen Spannungen ungeschwächt auf das Sensorelement.

Eine andere Möglichkeit, die Übertragung mechanischer Spannungen auf das deformierbare Sensorelement zu verringern, ist mit der Dissertation von H. Sandmaier (Technische Universität München, 1988), bekanntgeworden. Bei der dort beschriebenen Vorrichtung werden im Tragekörper oder im Zwischenstück Halbkreis-oder V-förmige Vertiefungen als Schwachstellen ausgebildet.

Diese Schwachstellen entkoppeln wirksam Relativbewegungen zwischen Gehäuse und Tragekörper. Allerdings können die Spannungen, die durch Verwölbungen bei der Verbindung von Tragekörper und Zwischenstück entstehen, nur dann vom Sensorelement abgehalten werden, wenn die Schwachstellen zwischen dem Tragekörper und dem Sensorelement angeordnet sind. Eine solche Anordnung der Schwachstellen führt jedoch bei gleicher Sensorgröße annähernd zu einer Verdoppelung der von der Vorrichtung benötigten Fläche.

Ferner offenbart die amerikanische Druckschrift US 4 800 758 eine Vorrichtung zur Messung mechanischer Kräfte und Kraftwirkungen, mit einem Gehäuse, einem deformierbaren Sensorelement, auf dem mechanisch-elektrische Signalwandler aufgebracht sind, und einem Tragekörper für das deformierbare Sensorelement, auf dem elektrische Zuführungen für den Signalwandler aufgebracht sind, und der mit dem Gehäuse über ein Zwischenstück verbunden ist, das eine Schwachstelle aufweist, wobei der Tragekörper und/oder das Zwischenstück wenigstens eine weitere Schwachstelle aufweisen. In der in dieser Druckschrift offenbarten Vorrichtung ist der gesamte Tragekörper mit Ausnahme des zentralen Bereichs "gedünnt", also gänzlich als Schwachstelle ausgeführt. Damit hat diese Ausführung den Nachteil, daß keine definierte Stelle vorhanden ist, an der Relativbewegungen, die zu Verwölbungen etc. führen können, aufgenommen werden.

Aus der deutschen Offenlegungsschrift DE 34 26 165 A1 ist ein Kraftmesser zu entnehmen, der in der Ausführungsform gemäß Figur 6 ein Zwischenstück aufweist, dessen Bereich der Verbindung zwischen dem Tragekörper und dem Zwischenstück parallel zur Verbindungsebene gedünnt ist. Mit Hilfe dieser Ausformung des Zwischenstücks sind jedoch nur Relativbewegungen senkrecht zur Verbindungsebene zu kompensieren, jedoch keine Relativbewegungen aufgrund von Spannungen die parallel zur Verbindungsebene wirken.

Schließlich geht aus der amerikanischen Druckschrift US 4 594 639 ein kapazitiver Drucksensor hervor, der ein Sensorelement aufweist, das über schräg zur Sensorebene verlaufende Verbindungstege mit dem Tragekörper verbunden ist. Zwar sind auf diese Weise mögliche Parallelverschiebungen zwischen Sensorelement und Tragekörper zu kompensieren doch weist diese Ausführungsform keine besonders ausgeführten Bereiche zwischen dem Trägerkörper und dem Zwischenstück auf, die gegebenenfalls Verspannungen der Relatiwersetzungen kompensieren können.

### Darstellung der Erfindung

Der Erfindung liegt die Aufgabe zugrunde, eine gattungsgemäße Vorrichtung zur Messung mechanischer Kräfte und Kraftwirkungen derart weiterzubilden, daß das Ausgangssignal bei möglichst geringen Abmessungen der Vorrichtung durch montagebedingte Verwölbungen unbeeinflußt bleibt.

Diese Aufgabe wird bei einer gattungsgemäßen Vorrichtung durch die kennzeichnenden Merkmale des Anspruchs 1 löst.

Der sich über die gesamte gemeinsame Kontaktfläche des Tragekörpers und des Zwischenstücks erstreckende gedünnte Bereich des Zwischenstückes läßt sich leicht verformen, so daß die bei der Herstellung, insbesondere beim Verbinden der einzelnen Elemente auftretenden mechanischen Spannungen von der Schwachstelle aufgenommen und nicht auf das Sensorelement übertragen werden. Dabei ist das Zwischenstück zwischen dem Kontaktbereich und dem Tragekörper und dem Kontaktbereich mit dem Gehäuse ziehharmonikaartig geformt. Damit werden auch Spannungen aufgrund von Relativbewegungen zwischen dem Gehäuse und dem Tragekörper sowie thermische Verspannungen wirksam vom Sensorelement abgehalten.
Vorteilhafte Weiterbildungen der Erfindung sind in den abhängigen Patentansprüchen gekennzeichnet.

Nach Anspruch 2 bestehen die Elemente der Vorrichtung aus halbleitendem Material bzw. aus Keramikwerkstoffen und sind dadurch einfach mit den Verfahren der Mikroelektronik und der Mikrostrukturtechnik herstellbar.

Gemäß Anspruch 3 werden als mechanisch-elektrische Signalwandler piezoresistive Widerstände verwendet. Dabei werden entweder Piezowiderstände oder Metalldehnungsmeßstreifen auf das Sensorelement aufgebracht oder Bereiche des Sensorelementes durch Dotierung in Piezowiderstände umgewandelt.

Die Signalwandlung kann nach Anspruch 4 auch kapazitiv erfolgen. Hierzu sind auf dem deformierbaren Sensorelement Elektroden vorgesehen, denen in geringem Abstand, beispielsweise auf den Zwischenstück, Gegenelektroden gegenüber stehen. Durch die Deformation des Sensorelementes aufgrund der Krafteinwirkung ändert sich der Abstand zwischen den Elektroden und den Gegenelektroden und damit die Kapazität der Anordnung. Aus der Kapazitätsänderung kann auf die einwirkende Kraft geschlossen werden. Diese Ausgestaltung eignet sich besonders für Vorrichtungen mit hoher Empfindlichkeit.

Eine weitere Methode der Signalwandlung ist in Anspruch 5 gekennzeichnet. Dabei wird ausgenützt, daß sich die Eigenfrequenz eines Resonators unter Einwirkung einer Kraft ändert. Als Resonator kann unmittelbar das deformierbare Sensorelement dienen, das zur Anregung von Schwingungen piezoelektrische Elemente trägt. Die Anregung kann ebenso durch periodische Zufuhr thermischer Energie erfolgen.

Gemäß Anspruch 6 wird der horizontal gedünnte Bereich des Zwischenstückes von einer Stütze unterstützt, um eine höhere Stabilität zu erreichen. Diese Ausführungsform erweist sich als besonders vorteilhaft, wenn auf die Verbindungsstelle, z.B. bei dem Herstellungsprozeß, zwischen Tragekörper und Zwischenstück hohe Kräfte wirken.

Eine spezielle Ausgestaltung der Vorrichtung gemäß Anspruch 7 dient zur Druckmessung. Das Sensorelement ist als ultradünne Membrane ausgebildet, deren Stützrand als Tragekörper dient und mit dem Zwischenstück verbunden ist. Die allseitig von dem Stützrand umgebene Membrane wölbt sich, wenn unterschiedliche Drücke auf die beiden Membranoberflächen wirken. Die Stärke der Wölbung, die z. B. mit Hilfe von Piezowiderständen erfaßt wird, läßt einen Schluß auf den Differenzdruck zu.

Nach Anspruch 8 sind die Membrane und der Tragekörper kreisförmig oder rechteckig ausgebildet. Die Wahl der Membranform ist dem jeweiligen Anwendungsfall angepaßt. Für eine optimale Störspannungskompensation sorgen Schwachstellen, die parallel zum Membranrand die gesamte Membran umgeben.

Gemäß Anspruch 9 kann eine Schwachstelle, im Sinne eines gedünnten Bereiches, im Tragekörper ausgebildet sein, und die gesamte Membrane umfassen, oder im Zwischenstück parallel zum Kontaktbereich mit dem Tragekörper verlaufen. Die Leiterbahnen zur Abnahme der elektrischen Signale können über dünne Stege, die mittels selektiver Ätztechnik hergestellt werden, in den Bereich des Tragekörpers geführt werden. Eine besonders effektive Spannungsentkopplung wird erreicht, wenn beide Möglichkeiten verwirklicht sind.

Eine Weiterbildung der Erfindung ist in Anspruch 10 gekennzeichnet. Parallel zur Oberfläche der Membrane und des Stützrandes ist eine Platte angeordnet, auf der eine elektronische Schaltung zur Auswertung der Meßsignale integriert ist. Die Platte ist mit dem Stützrand der Membrane mittels Metallstiften bzw. Bumps, vorzugsweise aus Gold, verbunden. Die Stifte gewährleisten sowohl den mechanischen, als auch den elektrischen Kontakt und werden in den mechanisch stabilsten Bereich des Sensorelementes angebracht. Bei einer quadratischen Membrane sind dies die Ecken des Stützrandes. Wegen ihrer geringen Ausdehnung wird über die Verbindungsstifte keine nennenswerte mechanische Spannung übertragen. Zur Herausführung der elektrischen Kontakte aus dem Gehäuse, weist die Platte Durchführungstifte auf, die durch das Gehäuse der Vorrichtung ragen. Die Durchführungsstifte dienen zusätzlich zur Unterstützung der Lagerung des Sensorelementes in vertikaler Richtung.

Die mit der Erfindung erzielten Vorteile bestehen insbesondere darin, daß der Einfluß der mechanischen Spannung, hervorgerufen durch die unterschiedlichen Materialparameter der Bestandteile der Vorrichtung sowie durch die Verbindungstechniken, auf das Ausgangssignal wirksam verhindert wird. Die bisher angewandten komplizierten und teuren Montagetechniken können durch einfache Verfahrensschritte bei der Herstellung der Vorrichtung vermieden werden.

Damit werden preiswerte Vorrichtungen zur Messung mechanischer Kräfte und Kraftwirkungen zur Verfügung gestellt, die sich für den Einsatz in der Automobil- und Haushaltsindustrie sowie der industriellen Meßtechnik eignen. Die erfindungsgemäßen Vorrichtungen zeichnen sich durch hohe Genauigkeit, große Langzeitstabilität, kleine Baugröße und niedrige Herstellungskosten aus.

### Kurze Beschreibung der Abbildungen

Die Erfindung wird nachfolgend anhand einiger Ausführungsbeispiele unter Bezugnahme auf die Zeichnungen näher beschrieben.
Es zeigen:
- Fig. 1: einen Querschnitt durch einen bekannten Druckmesser,
- Fig. 2a,b: Querschnitte durch Sensorelement und Tragekörper eines erfindungsgemäßen Druckmessers,
- Fig. 3: einen Querschnitt durch einen erfindungsgemäßen Druckmesser,

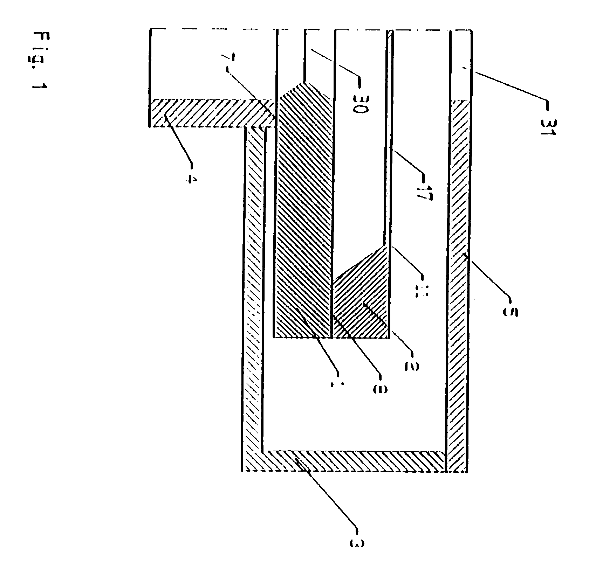

Die in Figur 1 dargestellte, bekannte Vorrichtung zur Druckmessung besteht aus einem Tragekörper 2, und einem Sensorelement, das als ultradünne Membrane 17 ausgebildet ist, trägt. Der Tragekörper 2,der als Stützrand für die Membrane 17 wirkt, ist mit einem Zwischenstück 1 verbunden, das zum Einbau in eine Gehäuse 3,4,5 dient. Sowohl das Zwischenstück 1 als auch der Tragekörper 2 sind beispielsweise aus einem 0,5 mm dicken Siliziumwafer hergestellt. Wenn verschiedene Materialien zur Herstellung verwendet werden, sollte das Material des Zwischenstücks einen kleineren Elastizitätsmodul als das des Tragekörpers sowie einen vergleichbaren thermischen Ausdehnungskoeffizienten aufweisen.

Das Zwischenstück 1 ist im Bereich 8 mit dem Tragekörper (Stützrand der Membrane) 2 und im Bereich 7 mit dem Gehäuse durch eine Bonding- oder Klebetechnik verbunden. Das Gehäuse besteht beispielsweise aus einem Rohr 4, einem Winkelstück 3 und einer Platte 5, die beispielsweise aus Pyrex hergestellt sind. Dabei ist es von besonderem Vorteil, daß durch die erfindungsgemäße Ausbildung auf dem Markt erhältliche übliche Gehäuse verwendet werden können. Durch das Rohr 4 und eine Öffnung 30 in der Mitte des Zwischenstücks 1 wird der Referenzdruck in die Vorrichtung eingeleitet. Der zu messende Druck kann durch eine Öffnung 31 in der Platte 5 auf die Membrane 17 wirken. In den Bereichen 11, die infolge einer Druckbelastung eine hohe mechanische Spannung bzw. Verformung aufweisen, sind die mechanisch-elektrischen Signalwandler angeordnet.

Bei der Verbindung des Zwischenstückes 1 mit dem Tragekörper 2 an der Verbindungsstelle 8 und mit dem Gehäuseteil 4 an der Verbindungsstelle 7 führen die erforderlichen hohen Temperaturen zu einer Verwölbung der Oberflächen infolge der thermischen Ausdehnung. Über die starre Verbindung 8 zwischen dem Tragekörper 2 und dem Zwischenstück 1 werden die dabei auftretenden mechanischen Spannungen auf die Verbindungsstelle 11 zwischen Tragekörper 2 und der Membrane 17 übertragen, wodurch das Ausgangssignal verfälscht wird.

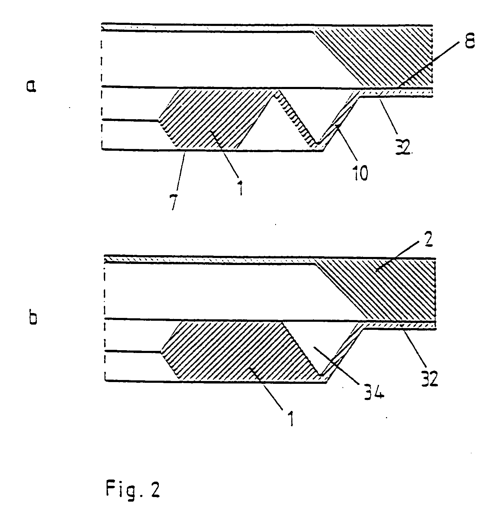

Das in der Figur 2a dargestellte Zwischenstück 1, das mit dem Tragekörper 2 verbunden ist weist erfindungsgemäß eine Schwachstelle 10 auf, die ziehharmonika ausgebildet ist. Bei dieser Ausführung werden neben den Verwölbungen Relativbewegungen zwischen Gehäuse, Zwischenstück und Tragekörper besonders wirkungsvoll ausgeglichen. In der Figur 2b weist das Zwischenstück neben dem gedünnten Bereich einen V-förmigen Graben 34, um Relativbewegungen und Verdrehungen aufzufangen.

Alle bisher beschriebenen Schwachstellen werden mit Hilfe anisotrop wirkender Ätzverfahren aus einkristalinen Halbleiterkörpern herausgearbeitet.

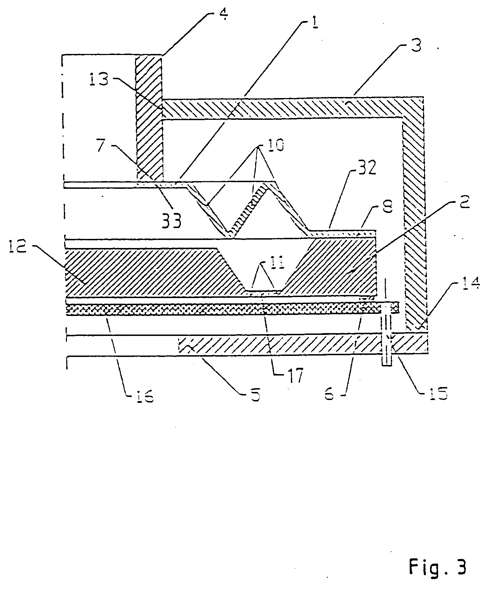

Ein bevorzugtes Ausführungsbeispiel ist in Figur 3 dargestellt. Zur Beschreibung des prinzipiellen Aufbaus sei auf Figur 1 und die zugehörige Beschreibung verwiesen. Die Vorrichtung ist in Face-Down-Montage ausgeführt. Das Zwischenstück 1 ist über dem Tragekörper und der Membrane 17 angeordnet und weist an der Kontaktstelle 7 zum Gehäuse einen horizontal gedünnten Bereich 33 und an der Kontaktstelle 8 zum Tragekörper einen horizontal gedünnten Bereich 32 auf. Zwischen den Kontaktstellen 7 und 8 besitzt das Zwischenstück 1 zieharmonikaartig geformte Schwachstellen 10.

Das Sensorelement ist als Membrane 17 ausgebildet, die im zentralen Bereich 12 verstärkt ist. Die mechanisch-elektrischen Signalwandler, z.B. Piezowiderstände, sind in den Bereichen 11 auf der Oberfläche der Membrane 17 angeordnet, die infolge einer Druckbelastung eine hohe mechanische Spannung erfahren. Parallel zur Oberfläche des Sensorelementes ist eine Platte 16 angebracht, auf der eine elektrische Schaltung zur Auswertung der Meßsignale integriert ist. Die Platte 16 kann beispielsweise aus Silizium oder Keramik (z.B. Al₂O₃, AlN) bestehen. Sie ist über punktförmige Metallstifte 6, die vorzugsweise aus Gold gefertigt sind, mit dem Tragekörper 2 verbunden. Neben der mechanischen Unterstützung des Tragekörpers gewährleisten die Stifte 6 den elektrischen Kontakt zwischen der Auswerteschaltung und den Signalwandlern. Die Platte 16 weist Durchführungsstifte 15 auf, die durch die Platte 5 des Gehäuses ragen. Sie dienen als elektrische Zuführungen und zur Unterstützung der Lagerung des Sensorelementes in vertikaler Richtung.

Die horizontal gedünnten Bereiche sowie die Schwachstellen können, wie bereits in der Beschreibung zu Figur 3 angedeutet, miteinander kombiniert werden. Die Stärke der Schwachstellen kann je nach Anwendungsfall und Druckbereich über einen großen Bereich von einigen Mikrometern bis zu einigen 100 Mikrometern variieren. Ihre Formen sind auch auf andere Materialien, z. B. Glas oder Keramik, übertragbar.

## Patentansprüche

1. Vorrichtung zur Messung mechanischer Kräfte und Kraftwirkungen, mit
- einem Gehäuse (4),
- einem deformierbaren Sensorelement, auf dem mechanisch-elektrische Signalwandler aufgebracht sind,
- einem Tragekörper (2) für das deformierbare Sensorelement, auf dem elektrische Zuführungen für den Signalwandler aufgebracht sind, und
- einem Zwischenstück (1), das den Tragekörper (2) mit dem Gehäuse (4) verbindet, und das eine Schwachstelle in Form eines gedünnten Bereiches aufweist, die sich über den gesamten Kontaktbereich mit dem Tragekörper (2) parallel zur Verbindungsebene erstreckt,
dadurch **gekennzeichnet**, daß das Zwischenstück (1) zwischen dem Kontaktbereich mit dem Tragekörper (2) und dem Kontaktbereich mit dem Gehäuse (4) ziehharmonikaartig geformt ist.

2. Vorrichtung nach Anspruch 1,
dadurch **gekennzeichnet**, daß der Tragekörper (2) mit dem Sensorelement aus einem Halbleiterkörper gefertigt ist, und das Zwischenstück (1) aus einem halbleitenden Material oder Glas oder einem Keramikwerkstoff besteht.

3. Vorrichtung nach Anspruch 1 oder 2,
dadurch **gekennzeichnet**, daß die mechanisch-elektrischen Signalwandler als piezoresistive Widerstände ausgebildet sind.

4. Vorrichtung nach Anspruch 1 oder 2,
dadurch **gekennzeichnet**, daß als mechanisch-elektrische Signalwandler auf dem Sensorelement Elektroden aufgebracht sind, denen feststehende Gegenelektroden gegenüberstehen und daß die Messung der Kraft bzw. Kraftwirkung kapazitiv erfolgt.

5. Vorrichtung nach Anspruch 1 oder 2,
dadurch **gekennzeichnet**, daß auf dem Sensorelement Resonatoren aufgebracht sind und daß die Kraft bzw. Kraftwirkung aus der Verstimmung der Eigenresonanz der Resonatoren ermittelt wird.

6. Vorrichtung nach einem der Ansprüche 1 bis 5,
dadurch **gekennzeichnet**, daß der horizontal gedünnte Bereich des Zwischenstückes (1) von einer Stütze unterstützt wird.

7. Vorrichtung nach einem der Ansprüche 1 bis 6,
dadurch **gekennzeichnet**, daß das Sensorelement als Membran (17) und der Tragekörper (2) als Stützrand ausgebildet sind.

8. Vorrichtung nach Anspruch 7,
dadurch **gekennzeichnet**, daß die Membran (17) kreisförmig oder rechteckig ausgebildet ist.

9. Vorrichtung nach Anspruch 8,
dadurch **gekennzeichnet**, daß der Tragekörper (2) und/oder das Zwischenstück (1) einen parallel zum Kontaktbereich (8) zwischen dem Tragekörper (2) und dem Zwischenstück (1) verlaufenden Graben (34) mit V-förmigem oder halbkreisförmigem Querschnitt aufweist.

10. Vorrichtung nach einem der Ansprüche 7 bis 9,
dadurch **gekennzeichnet**, daß parallel zur Oberfläche des Sensorelementes eine Platte (16) angeordnet ist, auf der eine elektronische Schaltung zur Auswertung der Meßsignale integriert ist, und die mittels Metallstiften (6) mit dem Stützrand des Sensorelementes verbunden ist und zur Herausführung der elektrischen Kontakte aus dem Gehäuse Durchführstifte aufweist, die durch das Gehäuse der Vorrichtung ragen.

## Claims

1. Device for measuring mechanical forces and dynamic effects, comprising
- a casing (4),
- a ductile sensor element onto which are applied mechanico-electrical signal converters,
- a supporting body (2) for said ductile sensor element, onto which are applied electrical leads for said signal converters, and
- an interposed element (1) connecting said supporting body (2) to said casing (4) and presenting a weakened area in the form of a thinned zone extending over the entire area of contact with said supporting body (2) in parallel with the joint plane,
**characterized** in that said interposed element (1) has the shape of a harmonica-like corrugation between the area of contact with said supporting body (2) and the area of contact with said casing (4).

2. Device according to Claim 1,
**characterized** in that said supporting body (2) with said sensor element is made of a semiconductor body, and that said interposed element (1) consists of a semiconductor material or glass or a ceramic material.

3. Device according to Claim 1 or 2,
**characterized** in that said mechanico-electrical signal converters are formed as piezoresistive resistors.

4. Device according to Claim 1 or 2,
**characterized** in that electrodes are applied as mechanico-electrical signal converters on said sensor element, which are faced by stationary opposite electrodes, and that the force or dynamic effect, respectively, is measured by a capacitive method.

5. Device according to Claim 1 or 2,
**characterized** in that resonators are applied on said sensor element, and that the force or dynamic effect, respectively, is determined from the detuning of the resonators' resonant frequency.

6. Device according to any of Claims 1 to 5,
**characterized** in that said horizontally thinned area on said interposed element (1) is supported by a prop.

7. Device according to any of Claims 1 to 6,
**characterized** in that said sensor element is designed as a diaphragm (17), and that said supporting body (2) is formed as a supporting rim.

8. Device according to Claim 7,
**characterized** in that said diaphragm (17) presents a circular or rectangular shape.

9. Device according to Claim 8,
**characterized** in that said supporting body (2) and/or said interposed element (1) present(s) a trough (34) having a V-shaped or semicircular cross-sectional area, which extends in parallel with said contact area (8) between said supporting body (2) and said interposed element (1).

10. Device according to any of Claims 7 to 9,
**characterized** in that a plate (16) is provided to extend in parallel with the surface of said sensor element, with an electronic circuit being integrated on said plate for evaluation of the measuring signals, which plate is connected to said supporting rim of said sensor element by means of metal pins (6) and presents thru-pins projecting through said casing of the device for lead-out of the electrical contacts from the casing.

## Revendications

1. Dispositif de mesure de forces mécaniques et des effets dynamiques, comprenant
- un carter (4),
- un élément détecteur ductile sur lequel sont appliqués des convertisseurs de signaux mécano-électriques,
- un corps de support (2) pour ledit élément détecteur ductile, sur lequel sont appliqués des conducteurs d'amenée pour lesdits convertisseurs de signaux, et
- une pièce intercalée (1) qui raccorde ledit corps de support (2) audit carter (4) et qui présente une zone affaiblie sous forme d'une zone amincie qui s'étend sur toute la surface de contact avec ledit corps de support (2) en parallèle au plan de jonction,
**caractérisé** en ce que ladite pièce intercalée (1) est prévue sous forme d'accordéon entre la zone de contact avec ledit corps de support (2) et la zone de contact avec ledit carter (4).

2. Dispositif selon la revendication 1,
**caractérisé** en ce que ledit corps de support (2), ensemble avec ledit élément détecteur, est fait d'un corps semi-conducteur, et en ce que ladite pièce intercalée (1) est faite d'un matériau semi-conducteur ou en verre ou d'un matériau céramique.

3. Dispositif selon la revendication 1 ou 2,
**caractérisé** en ce que lesdits convertisseurs des signaux mécano-éléctriques sont formés en tant que des résistances piézo-résistives.

4. Dispositif selon la revendication 1 ou 2,
**caractérisé** en ce que des électrodes sont appliquées en tant que des convertisseurs des signaux mécano-électriques sur ledit élément détecteur, auxquelles font face des éléctrodes opposées, de façon que la force ou respectivement l'effet dynamique soit mesuré par un processus capacitif.

5. Dispositif selon la revendication 1 ou 2,
**caractérisé** en ce que des résonateurs sont appliqués sur ledit élément détecteur, et en ce que la force ou respectivement l'effet dynamique est déterminé en le dérivant de la mise hors résonance de la fréquence propre desdits résonateurs.

6. Dispositif selon une quelconque des revendications 1 à 5,
**caractérisé** en ce que ladite zone à amincissement horizontale sur ladite pièce intercalée (1) est appuyée par un soutien.

7. Dispositif selon une quelconque des revendications 1 à 6,
**caractérisé** en ce que ledit élément détecteur est prévu sous forme d'une membrane (17), et en ce que ledit corps de support (2) est prévu sous forme d'un bord d'appui.

8. Dispositif selon la revendication 7,
**caractérisé** en ce que ladite membrane (17) a une forme circulaire ou rectangulaire.

9. Dispositif selon la revendication 8,
**caractérisé** en ce que ledit corps de support (2) et/ou ladite pièce intercalée (1) est prévu d'un enfoncement (34) à section transversale en V ou semi-circulaire, qui s'étend en parallèle à ladite zone de contact (8) entre ledit corps de support (2) et ladite pièce intercalée (1).

10. Dispositif selon une quelconque des revendications 7 à 9,
**caractérisé** en ce qu'une plaque (16) est prévue, qui s'étend en parallèle à la surface dudit élément détecteur, un circuit électronique étant intégré sur ladite plaque pour l'évaluation des signaux de mesure, laquelle plaque est raccordée audit bord d'appui dudit élément détecteur moyennant des goupilles métalliques (6), et comprend des goupilles de traversée qui s'étendent à travers ledit carter du dispositif afin de faire sortir les contacts électriques du carter.
